# EUROPÄISCHE PATENTSCHRIFT

(11) **EP 2 387 483 B1**
(45) Veröffentlichungstag und Bekanntmachung des Hinweises auf die Patenterteilung: **02.07.2014**
(21) Anmeldenummer: 10700388.1
(22) Anmeldetag: 15.01.2010
(51) Int. Cl.: B23Q 11/08, B23Q 7/04, B23Q 7/10, B23Q 7/14

(54) **BEARBEITUNGSMASCHINE MIT WERKSTÜCKMAGAZIN**
MACHINE TOOL HAVING WORKPIECE HOPPER
MACHINE DE TRAITEMENT PRÉSENTANT UN MAGASIN PORTE-PIÈCES

(30) Priorität: 16.01.2009 DE 102009005945; 24.02.2009 DE 102009011672
(43) Veröffentlichungstag der Anmeldung: 23.11.2011
(73) Patentinhaber: Ivoclar Vivadent AG, 9494 Schaan (LI)
(72) Erfinder: EVERTZ, Jörg, CH-8903 Birmensdorf (CH); VON BOTH, Holger, 78224 Singen (DE)
(74) Vertreter: Splanemann
(86) Internationale Anmeldenummer: PCT/EP2010/000198
(87) Internationale Veröffentlichungsnummer: WO 2010/081711

(56) Entgegenhaltungen:
- DE-A1- 3 043 361
- DE-A1- 19 853 945
- DE-U1- 29 923 033
- DE-U1-202007 014 117
- US-A- 4 480 738
- US-A- 5 781 983

## Beschreibung

### Anwendungsgebiet und Stand der Technik

Die Erfindung betrifft eine Bearbeitungsmaschine zur spanenden Bearbeitung eines Werkstücks, insbesondere zur spanenden Bearbeitung eines Werkstücks oder eines Rohlings zur Herstellung eines Zahnersatzteils oder Gebissmodells.

Eine gattungsgemäße Bearbeitungsmaschine weist einen ortsfesten Rahmen, ein Werkstückmagazin sowie eine gegenüber dem Rahmen bewegbaren Werkstückschlitten zur Aufnahme eines Werkstücks auf. Dabei ist das Werkstückmagazin zur Aufnahme einer Mehrzahl von Werkstücken ausgebildet, die durch das Werkzeugmagazin bis in eine Übergabeposition bewegbar sind. Weiterhin ist der Werkstückschlitten zur translativen Bewegung des Werkstücks im Zuge der Werkstückbearbeitung, beispielsweise einer Fräs-, Bohr- und/oder Schleifbearbeitung, in Richtung einer X-Achse ausgebildet.

Gattungsgemäße Bearbeitungsmaschinen sind aus dem Stand der Technik bekannt (siehe z.B. DE 3 043 361). Das Werkstückmagazin dient bei solchen gattungsgemäßen Bearbeitungsmaschinen der Aufnahme einer Vielzahl von Werkstücken, so dass ohne manuelles Zutun ein automatisierter Wechsel des Werkstücks erfolgen kann, sobald ein Werkstück fertig bearbeitet wurde und zur weiteren Bearbeitung ein neues Werkstück am Werkstückschlitten aufgenommen werden soll. Die aus dem Stand der Technik bekannten Bearbeitungsmaschinen weisen üblicherweise einen separaten Handhabungsmechanismus auf, der für diese Überführung eines Werkstücks aus dem Werkstückmagazin zur Bearbeitungsposition Sorge trägt. Die Handhabungseinrichtung ergreift hierfür ein Werkstück in der Übergabeposition des Werkstückmagazins und legt dieses in der Bearbeitungsposition zur nachfolgenden Bearbeitung fest. Bekannt sind auch Palettensysteme, bei denen Paletten mit aufgespannten Werkstücken automatisiert in eine Bearbeitungsposition verfahren werden, in der dann nachfolgend bei feststehender Palette die Bearbeitung stattfindet.

Nachteilig an dieser aus dem Stand der Technik bekannten Gestaltung ist, dass die Handhabungseinrichtung zusätzlichen Platz benötigt und zusätzliche Kosten verursacht. Insbesondere bei Bearbeitungsmaschinen, die zur Herstellung von Zahnersatzteilen aus Rohlingen ausgebildet sind, ist der zusätzliche Platzbedarf von Nachteil, da diese Maschinen platzsparend ausgebildet sein sollten, um in Dentallaboren oder Arztpraxen aufgestellt werden zu können.

### Aufgabe und Lösung

Aufgabe der Erfindung ist es, eine gattungsgemäße Bearbeitungsmaschine zu verbessern, insbesondere derart, dass die Überführung von Werkstücken aus dem Werkstückmagazin in die Bearbeitungsposition am Werkstückschlitten ohne Inkaufnahme der Nachteile des Standes der Technik erfolgen kann.

Erfindungsgemäß wird dies durch eine Bearbeitungsmaschine nach Anspruch 1 erreicht.

Erfindungsgemäß wird demnach auf eine separate Handhabungseinrichtung zur Handhabung der Werkstücke vollständig verzichtet. Stattdessen wird die ohnehin zum Zwecke der Bearbeitung vorgesehene Bewegbarkeit des Werkstückschlittens in Richtung der X-Achse genutzt, um das Werkstück bis in die Übergabeposition bewegen zu können. Die Übergabeposition ist zu diesem Zweck fluchtend mit dem Bewegungspfad des Werkstücks in Richtung der X-Achse angeordnet. Bei der Bewegbarkeit des Werkstücks in Richtung der X-Achse handelt es sich vorzugsweise um die einzige vorgesehene Möglichkeit, um das Werkstück relativ zum Werkzeug in Richtung der X-Achse zu verlagern.

Im Hinblick auf das Werkzeugmagazin ist die genannte Übergabeposition dadurch gekennzeichnet, dass sie für das durch den Werkstückschlitten aufzunehmende Werkstück ohne eine vorherige Separierung dieses Werkstückes von den übrigen Werkstücken erreichbar ist. Die Werkstücke sind vorzugsweise entlang eines gemeinsamen Bewegungspfades automatisiert bewegbar, wobei die Übergabeposition auf diesem Bewegungspfad angeordnet ist. Durch eine gemeinsame Bewegung aller im Werkstückmagazin aufgenommenen Werkstücke kann somit das zur Bearbeitung vorgesehene Werkstück in die Übergabeposition bewegt werden. Sobald dieses Werkstück die Übergabeposition erreicht hat, wird der Antrieb des Werkstückmagazins angehalten, so dass das betreffende Werkstück in der Übergabeposition verbleibt. Dort kann es unmittelbar durch den Werkstückschlitten erfasst werden, indem der Werkstückschlitten über die Grenze des Bereichs hinausbewegt wird, in welchem der Werkstückschlitten zur Bearbeitung der Werkstücke bewegt wird. Der Werkstückschlitten wird so weit verfahren, bis das Werkstück ankoppelbar ist. Sobald die Kopplung zwischen dem Werkstückschlitten und dem Werkstück erfolgt ist, wird das Werkstück mittels des Werkstückschlittens aus der Übergabeposition heraus in den Bearbeitungsbereich bewegt.

Vorzugsweise ist am Werkstückschlitten ein durch ein Steuergerät der Bearbeitungsmaschine ansteuerbarer Kopplungsmechanismus vorgesehen, mittels dessen ein in einer Kopplungsposition befindliches Werkstück fest mit dem Werkstückschlitten verbunden werden kann.

Bei einem Austausch des zu bearbeitenden Werkstücks wird durch die erfindungsgemäße Bearbeitungsmaschine zunächst das zuvor bearbeitete Werkstück in der Übergabeposition in eine Aufnahme des Werkstückmagazins eingefügt. Sofern dieses Werkstück zuvor durch den genannten Kopplungsmechanismus fest mit dem Werkstückschlitten verbunden war, erfolgt in der Übergabeposition eine Entkopplung. Anschließend wird durch einen Antrieb des Werkstückmagazins ein anderes Werkstück bis in diese Übergabeposition bewegt, welches nachfolgend dann durch den Werkstückschlitten erfasst oder durch den Kopplungsmechanismus an den Werkstückschlitten angekoppelt wird.

Vorzugsweise sind die Werkstücke jeweils in einem Werkstückhalter festgelegt, wobei das Werkzeugmagazin und der Werkzeugschlitten zur Handhabung dieser Werkzeughalter ausgebildet sind. Bei einer solchen Gestaltung werden somit nicht die reinen Werkstücke bzw. Rohlinge vom Werkzeugmagazin an den Werkstückschlitten übergeben, sondern die Werkstücke bzw. Rohlinge mitsamt einem fest daran angebrachten Werkstückhalter. Dies erleichtert die Handhabung, da am Werkstückhalter in einfacher Art und Weise Kopplungsmittel zur Kopplung des Werkstückhalters am Werkstückmagazin und/oder am Werkstückschlitten anbracht sein können. Insbesondere können getrennte Kopplungsmittel zur Kopplung am Werkstückschlitten einerseits und zur Führung durch Werkstückmagazin andererseits vorgesehen sein.

Besonders von Vorteil ist es, wenn das Werkstückmagazin als separat lösbare und entfernbare Einheit ausgebildet ist. Dies führt zu einem modularen Aufbau der Bearbeitungsmaschine, bei dem fallweise auch der Betrieb ohne das Werkstückmagazin möglich ist. Bei einer Gestaltung ohne das anbringbare Werkstückmagazin ist die Übergabeposition vorzugsweise zum manuellen Wechsel des Werkstücks von außen zugänglich. Es kann dann seitens des Werkstückschlittens der gleiche Bewegungsablauf wie beim Vorhandensein eines Werkstückmagazins genutzt werden, wobei statt der automatisierten Bewegung der Werkstücke mittels des Werkstückmagazins das anzukoppelnde Werkstück manuell durch einen Bediener in die Übergabeposition verbracht wird, in der die Kopplung mit der Werkstückschlitten erfolgt.

Der Tausch des Werkstücks findet außerhalb des Bearbeitungsraums statt. Somit kann auch beim manuellen Wechsel des Werkstücks darauf verzichtet werden, den Bearbeitungsraum in seiner Gesamtheit zu öffnen. Stattdessen reicht es, wenn der Werkstückschlitten in Richtung der X-Achse zumindest zum Teil aus dem Bearbeitungsraum und somit aus dem Gehäuse herausgefahren wird, so dass außerhalb dieses Gehäuses ein nachfolgend zu bearbeitendes Werkstück an den Werkstückschlitten angekoppelt werden kann.

Das Werkstückmagazin ist dafür ausgebildet, die Werkstücke entlang eines Bewegungspfades zu bewegen. Dabei kann es sich um einen nicht geschlossenen Bewegungspfad handeln, so dass die Werkstücke im Werkstückmagazin jeweils zwischen zwei Endpositionen beweglich sind. Bevorzugt ist jedoch eine Gestaltung mit einem geschlossenen Bewegungspfad, so dass jedes der Werkstücke im Werkstückmagazin alternativ aus zwei unterschiedlichen Richtungen in die Übergabeposition verfahren werden kann. Bei einem solchen geschlossenen Pfad, also bei vollständig umlaufender Bewegbarkeit der Werkstücke, sind die durch die Werkstücke im Werkstückmagazin zurückzulegenden Wege im Mittel kürzer.

Im einfachsten Fall ist der Bewegungspfad gradlinig ausgebildet, beispielsweise durch ein Werkstückmagazin, durch welches die Werkstücke in vertikaler Richtung verfahren werden können. Bevorzugt ist es jedoch, wenn der Bewegungspfad nicht gradlinig, sondern beispielsweise kreisbogenförmig oder kreisförmig ausgebildet ist, da hierdurch eine größere Zahl von Werkstücken in einem vergleichsweise kleinen Volumen vorgehalten werden können. Die Bewegungsrichtung der Werkstücke im Werkstückmagazin, insbesondere im Bereich der Übergabeposition, ist vorzugsweise orthogonal zur X-Achse ausgerichtet.

Bei einer erfindungsgemäßen Bearbeitungsmaschine kann das Werkstückmagazin sehr einfach ausgebildet sein. Im einfachsten Falle ist es lediglich zur automatisierten gemeinsamen Handhabung aller enthaltenen Werkstücke ausgebildet. Das Werkstückmagazin muss demnach keine Motoren bzw. Aktoren aufweisen, die eine individuelle Handhabung einzelner Werkstücke erlaubt. Stattdessen ist nur eine gemeinsame Antriebseinrichtung vorgesehen, mittels derer alle Werkstücke im Werkstückmagazin gemeinsam bewegt werden können. So kann beispielsweise diese Antriebseinrichtung dazu vorgesehen sein, einen Drehkörper mit einer Mehrzahl von auf seinem Umfang vorgesehenen Werkstückaufnahmen rotativ zu bewegen.

Vorzugsweise sind die Werkstücke entlang zumindest eines Teils des Bewegungspfades gegen eine Entnahme gesichert und nur in speziellen Abschnitten entnehmbar bzw. einfügbar. Ein solcher Abschnitt ist vorzugsweise auch an der Übergabeposition vorgesehen, so dass ein an der Übergabeposition befindliches Werkstück quer zum Bewegungspfad, insbesondere in Richtung der X-Achse, aus dem Werkstückmagazin entnommen werden kann, ohne dass eine vorherige motorische Entkopplung vom Werkstückmagazin erforderlich ist

Die erfindungsgemäße Bearbeitungsmaschine weist vorzugsweise ein Steuergerät auf, welches dahingehend ausgebildet ist, dass es eine Bewegung des Werkstückschlittens sowohl zum Zwecke der Bewegung des Werkstücks relativ zum Werkzeug während der Bearbeitung als auch zum Zwecke des Werkstückwechsels steuert. Dieses Steuergerät ist demnach dafür vorgesehen, den Werkstückschlitten im Sinne der oben beschriebenen Doppelfunktion anzusteuern.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, welches nachfolgend anhand der Figuren erläutert wird. Dabei zeigen:
- Fig. 1: eine erfindungsgemäße Bearbeitungsmaschine mit Werkzeugmagazin,
- Fig. 2: die Bearbeitungsmaschine der Fig. 1 im geöffneten Zustand,
- Fig. 3: einen Kopplungsmechanismus an einem Werkstückschlitten der Bearbeitungsmaschine der Fig. 1 und 2,
- Fig. 4: die Festlegungsmittel für Werkstücke im Werkstückmagazin und
- Fig. 5a bis 5f: verschiedene Stadien eines Werkzeugwechsels.

### Detaillierte Beschreibung der Ausführungsbeispiele

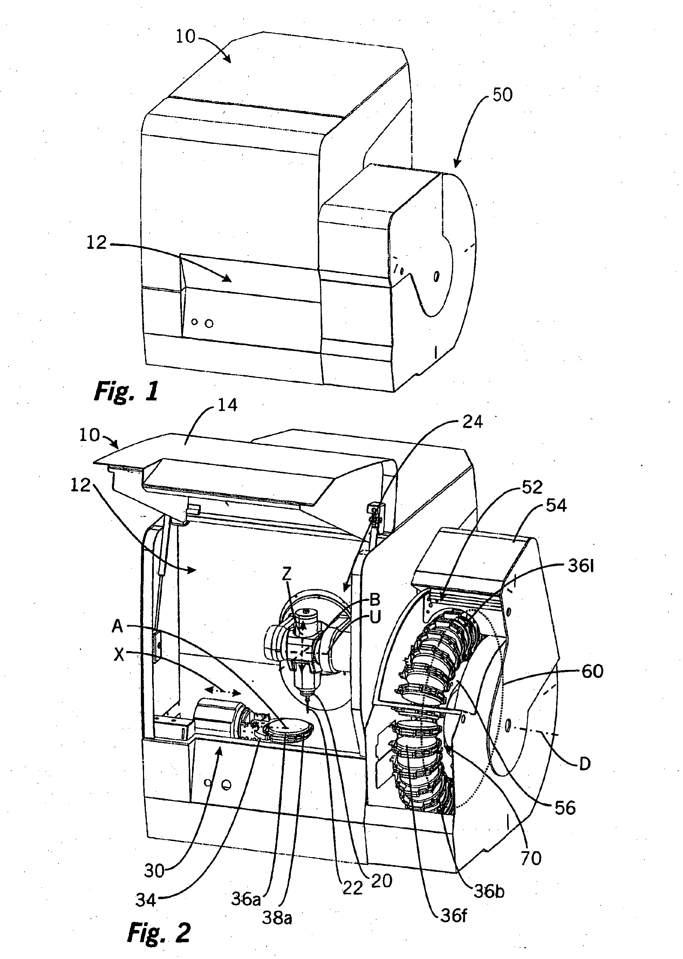

Die Fig. 1 zeigt eine erfindungsgemäße Bearbeitungsmaschine. Diese verfügt über eine Haupteinheit 10, in der ein im dargestellten geschlossenen Zustand durch eine Scheibe sichtbarer Bearbeitungsraum 12 vorgesehen ist. An der Haupteinheit 10 ist eine Werkzeugmagazineinheit 50 vorgesehen, die lösbar an die Haupteinheit 10 angekoppelt ist.

Die Fig. 2 zeigt die Bearbeitungsmaschine der Fig. 1 in einem aufgeklappten Zustand. Dabei ist sowohl eine Zugangsabdeckung 14 der Haupteinheit 10 als auch eine Zugangsabdeckung 54 der Werkstückmagazineinheit 50 aufgeklappt, so dass sowohl der Bearbeitungsraum 12 als auch ein Werkstückmagazinraum 52 frei zugänglich sind.

Im Bearbeitungsraum 12 ist eine Spindel 20 mit eingesetztem Werkzeug 22 vorgesehen. Diese Spindel 20 kann über eine nicht näher erläuterte Bewegungseinheit 24 entlang einer Z-Achse translativ verfahren werden und um zwei zueinander orthogonale Achsen U und B verschwenkt werden.

Ebenfalls im Bearbeitungsraum 12 angeordnet ist ein Werkstückschlitten 30, der in Richtung einer X-Achse translativ verfahrbar ist. Hierzu sind an der Rückwand des Bearbeitungsraums Führungsschienen vorgesehen, die aus der Perspektive der Fig. 2 nicht erkennbar sind. Am Werkstückschlitten 30 ist eine um eine A-Achse verschwenkbare Spanneinrichtung 34 vorgesehen, an die ein Werkstück 36a über einen fest am Werkstück angebrachten Werkstückhalter 38a ankoppelbar ist. Mittels der Bewegbarkeit des Werkstückschlittens 30 in Richtung der X-Achse wird während eines nicht näher erläuterten Bearbeitungsvorgangs die Relativlage des Werkstücks 36a gegenüber dem Werkzeug 22 gesteuert, um das Werkstück 36a mittels des Werkzeugs 22 dreidimensional bearbeiten zu können.

In dem geöffneten Werkstückmagazinraum 52 sind eine Vielzahl von Werkstücken 36b bis 36z angeordnet. Diese Werkstücke 36b bis 36z sind an einem Transportrad 56 befestigt, welches um eine Drehachse D elektromotorisch drehbar ausgebildet ist. Mittels dieses Transportrades 56 können alle eingesetzten Werkstücke 36b bis 36z gemeinsam entlang eines Bewegungspfades 60 bewegt werden. Dieser Bewegungspfad 60 ist entsprechend dem Transportrad 56 kreisförmig ausgebildet. Die Bewegung der Werkstücke erfolgt entlang dieses Bewegungspfades 60 auf einer Ebene, deren Normalenvektor parallel zur X-Achse ausgerichtet ist.

Der Bewegungspfad 60, entlang dessen die Werkstücke 36b bis 36z durch das Transportrad 56 bewegbar sind, ist gegenüber dem Werkstückschlitten 30 sowie dessen Beweglichkeit in Richtung der X-Achse derart angeordnet, dass auf dem Bewegungspfad 60 eine Übergabeposition 70 vorgesehen ist, die mit der Bewegungsrichtung des Schlittens 30 entlang der X-Achse fluchtet, so dass der Schlitten 30 mit der Spanneinrichtung 34 bis zur Übergabeposition verfahren werden kann. Im Zustand der Fig. 2 befindet sich das Werkstück 36c in dieser Übergabeposition 70.

Die Übergabeposition 70, die einerseits für die an dem Transportrad 56 angebrachten Werkstücke im Werkzeugmagazin 50 erreichbar ist und die andererseits auch durch Verfahren des Schlittens 30 für die Spanneinrichtung 34 bzw. das an der Spanneinrichtung 34 angekoppelte Werkstück 36a erreichbar ist, erlaubt es, Werkstücke 36a bis 36z zwischen dem Werkstückschlitten 30 und dem Transportrad 56 des Werkstückmagazins 50 auszutauschen, ohne dass hierfür weitere Handhabungseinrichtungen erforderlich sind, die das Werkstück vom Transportrad 56 zum Schlitten 30 oder vom Schlitten 30 zum Transportrad 56 bewegen. Stattdessen kann ein neues Werkstück 36c an den Werkstückschlitten 30 angekoppelt werden, indem dieses anzukoppelnde Werkstück 36c mittels des Transportrades 56 zunächst in die Übergabeposition 70 bewegt wird. Anschließend fährt der Werkstückschlitten 30 bezogen auf die Darstellung der Fig. 1 und 2 nach rechts, bis die Einspanneinrichtung 34 des Werkstückschlittens 30 an dem zu bearbeitenden Werkstück 36f bzw. dessen Werkstückhalter 38f anliegt. In diesem Zustand erfolgt angesteuert durch ein Steuergerät der Bearbeitungsmaschine die Ankopplung des Werkstückhalters 38f an die Einspanneinrichtung 34. Nach Abschluss dieses Kopplungsvorgangs wird der Werkstückschlitten 30 gemeinsam mit dem nunmehr daran befestigten Werkstück 36f nach links verfahren, so dass das Werkstück 36f in den Bearbeitungsraum 12 einfährt. Dort kann nachfolgend die Bearbeitung des Werkstücks 36c beginnen, wobei die Bewegbarkeit des Werkstückschlittens 30 während der Bearbeitung genutzt wird, um das Werkstück 36f gegenüber dem Werkzeug 22 in Richtung der X-Achse zu verfahren. Es bedarf daher keiner zusätzlichen Bewegbarkeit beispielsweise des Werkzeugs 22 in Richtung der X-Achse.

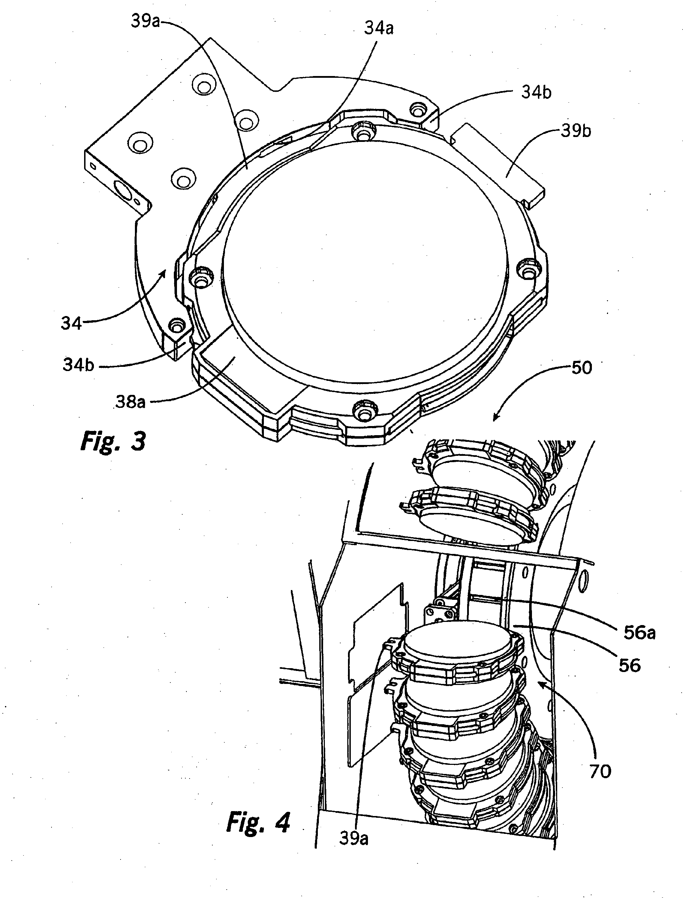

Anhand der Fig. 3 und 4 sind die Kopplungseinrichtung zum Ankoppeln eines Werkstücks bzw. des Werkstückhalters an der Einspanneinrichtung 34 sowie die Festlegung der im Werkstückmagazin angeordneten Werkstücke am Transportrad 56 verdeutlicht.

Figur 3 zeigt die Einspanneinrichtung 34. Die Einspanneinrichtung 34 weist eine maulartige Ausnehmung 34a auf, in die der Werkstückhalter 38a mit einem an die Ausnehmung 34a angepassten ersten Einschiebeabschnitt 39a eingeschoben ist. In nicht näher dargestellter Art und Weise sind auf Seiten der Einspanneinrichtung 34 in der Ausnehmung 34a Sicherungselemente angeordnet, die über ein elektrisches Signal des Steuergerätes derart verfahrbar sind, dass sie in der dargestellten Lage den ersten Einschiebeabschnitt 39a formschlüssig sichern, so dass der Werkstückhalter 38a nicht mehr aus der Ausnehmung 34a herausgezogen werden kann, bis die Sicherungselemente den ersten Einschiebeabschnitt 39a freigeben. Zusätzlich zu dieser formschlüssigen Sicherung des Einschiebeabschnitts 39a in der Ausnehmung 34a ist der Werkstückhalter 38a durch zwei Stützabschnitt 34b der Einspanneinrichtung gestützt, so dass der Werkstückhalter 38a zuverlässig ortsfest zur Einspanneinrichtung 34 beweglich ist.

Neben dem ersten Einschiebeabschnitt 39a weist der Werkstückhalter 38a einen zweiten Einschiebeabschnitt 39b auf, dessen Bedeutung im Zusammenhang mit Figur 4 erläutert wird.

Figur 4 zeigt in einer vergrößerten Ansicht die Übergabeposition 70 des Werkzeugwechslers 50. Es ist ersichtlich, dass das Transportrad 56 für jeden Werkstückhalter auf dem Außenumfang liegende schlitzförmige Ausnehmungen 56a aufweist. In diese Ausnehmungen 56a können die in Fig. 3 dargestellten zweiten Einschiebeabschnitte 39b der Werkstückhalter eingeschoben werden. Dadurch sind die Werkstückhalter fest in diesen Ausnehmungen 56a gehalten, ohne dass sie eine darüber hinausgehende Fixierung benötigen, um bei einer Rotation des Transportrades 56 ortsfest zu diesem mitgeführt zu werden. In nicht näher dargestellter Art und Weise sind die Ausnehmungen 56a beidseitig durch mit aufeinander zu weisenden Nuten versehen, die formschlüssig mit den zweiten Einschiebeabschnitten 39b der Werkstückhalter zusammenwirken.

Beim Ablegen eines Werkstückhalters wird die Einspanneinrichtung 34 mit dem Werkstückhalter soweit verfahren, dass der zweiten Einschiebeabschnitt 39b des Werkstückhalters 38a in die Ausnehmung 56a einrückt. Dort wird die oben genannte formschlüssige Kopplung mit dem Transportrad 56 hergestellt, indem der zweiten Einschiebeabschnitten in die genannten Nuten einfährt. Anschließend werden die Sicherungselemente der Einspanneinrichtung 34 außer Eingriff gebracht, die zuvor den Formschluss zwischen den ersten Einschiebeabschnitten 39a und der Einspanneinrichtung 34 bewirkt haben. Eine nachfolgende Rückverlagerung der Einspanneinrichtung 34 nach links führt aufgrund des zuvor herstellten Formschlusses zwischen dem zweiten Einschiebeabschnitt 39b und dem Transportrad 56 dazu, dass der abzulegende Werkstückhalter 38a von der Einspanneinrichtung 34 getrennt wird und am Transportrad 56 verbleibt.

Beim nachfolgenden Ankoppeln eines neuen Werkstücks fährt die leere Einspanneinrichtung 34 an den am Transportrad 56 gehaltene anzukoppelnden Werkstückhalter heran, so dass der erste Einschiebeabschnitt 39a in die Ausnehmung 34a einfährt. Wenn dies geschehen ist, werden die Sicherungselemente in Eingriff mit dem Werkstückhalter gebracht und die Einspanneinrichtung mit dann angekoppeltem Werkstückhalter zurück in den Bearbeitungsbereich verfahren. Dabei löst sich der Werkstückhalter vom Transportrad, mit dem er zu diesem Zeitpunkt nicht mehr formschlüssig verbunden ist.

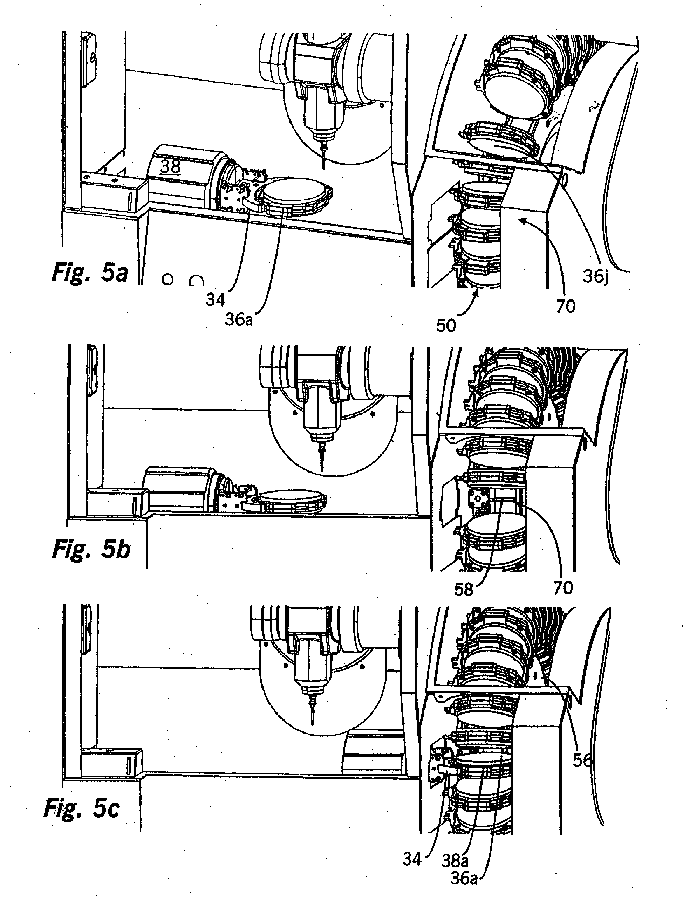

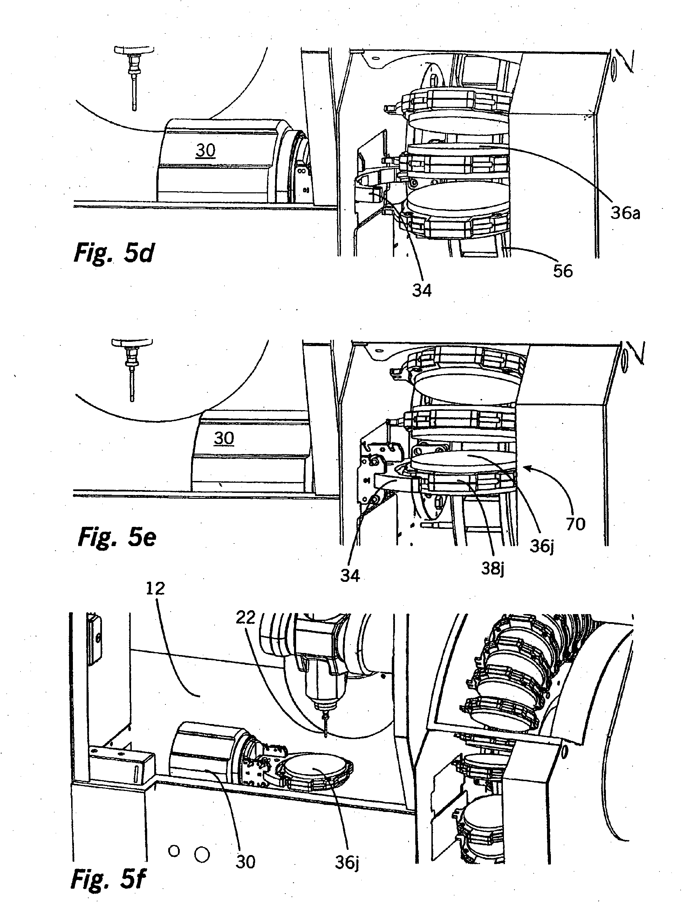

Die Fig. 5a bis 5f verdeutlichen den Vorgang des Werkstückwechsels in verschiedenen Stadien.

Fig. 5a zeigt in einer vergrößerten Darstellung einen Zustand der Bearbeitungsmaschine, der dem Zustand der Fig. 2 entspricht. In diesem Zustand ist an der Einspanneinrichtung 34 des Werkstückschlittens 30 bereits ein Werkstück 36a angekoppelt. Dieses soll in dem Werkstückmagazin abgelegt werden. Anschließend soll ein anderes Werkstück 36j aus dem Werkstückwechsler 50 in Bearbeitung genommen werden.

Hierfür wird zunächst das Transportrad 56 des Werkstückwechslers 50 aktiviert. Hierdurch werden alle im Werkstückwechsler befindlichen Werkstücke um die Drehachse D gedreht, bis ein freier Aufnahmeplatz 58 an der Übergabeposition 70 angeordnet ist. Dieser Zustand ist in Fig. 5b dargestellt.

Sobald dies erreicht ist, wird der Schlitten 30 gemeinsam mit dem an der Einspanneinrichtung 34 angekoppelten Werkstück 36a nach rechts verfahren. Hierdurch kommt der Werkstückhalter 38a des Werkstücks 36a in Eingriff mit dem Transportrad 56. Sobald dieser in Fig. 5c dargestellte Zustand erreicht wurde, wird der Werkstückhalter 38a durch das Steuergerät der Bearbeitungsmaschine von der Einspanneinrichtung 34 abgekoppelt.

Nachdem der Schlitten 30 geringfügig nach links verfahren wurde und sich dadurch vom Werkstückhalter 38a getrennt hat, wird nachfolgend mittels des Elektromotors des Werkstückwechslers das Transportrad 56 weiterbewegt. Hierbei wird das von der Einspanneinrichtung 34 entkoppelte Werkstück 36a mittransportiert und somit von der Einspanneinrichtung 34 beabstandet. Dieser Zustand ist in Fig. 5d dargestellt.

Die Bewegung des Transportrades 56 wird weitergeführt, bis das Werkstück 36j in der Übergabeposition 70 angeordnet ist. Sobald dieser in Fig. 5e dargestellte Zustand erreicht ist, wird der Schlitten 30 wieder leicht nach rechts verfahren, so dass die Einspanneinrichtung 34 in Eingriff mit dem ersten Einschiebeabschnitt 39a des Werkstückhalters 38j in Eingriff kommt. Anschließend wird vom Steuergerät der Bearbeitungsmaschine die Einspanneinrichtung 34 angesteuert, so dass diese das in der Übergabeposition 70 befindliche Werkstück 36j mit dem Werkstückhalter 38j durch die Sicherungselemente an den Werkstückschlitten 30 ankoppelt.

Anschließend wird der Werkstückschlitten gemeinsam mit dem an der Einspanneinrichtung 34 angekoppelten Werkstück 36j zurück in den Bearbeitungsraum 12 verfahren. Dort kann anschließend die Bearbeitung des Werkstücks 36j beginnen, wobei die zuvor zum Werkstückwechsel genutzte Bewegbarkeit des Schlittens 30 genutzt wird, um die eine dreidimensionale Relativbewegung des Werkstücks 36j relativ zum Werkzeug 22 zu ermöglichen.

## Patentansprüche

1. Bearbeitungsmaschine zur spanenden Bearbeitung eines Werkstücks, insbesondere zur spanenden Bearbeitung eines Werkstücks oder eines Rohlings zur Herstellung eines Zahnersatzteils oder Gebissmodells, mit
- einem ortsfesten Rahmen,
- einem Werkstückmagazin (50) und
- einem gegenüber dem Rahmen bewegbaren Werkstückschlitten (30) zur Aufnahme eines Werkstücks (36a-36l),
wobei
- das Werkstückmagazin (50) für die Aufnahme einer Mehrzahl von Werkstücken (36a-36l) ausgebildet ist,
- das Werkstückmagazin (50) dafür ausgebildet ist, Werkstücke (36a-361) bis in eine Übergabeposition (70) zu bewegen,
- der Werkstückschlitten (30) zur translativen Bewegung des Werkstücks (36a-361) im Zuge der Werkstückbearbeitung in Richtung einer X-Achse ausgebildet ist,
der Werkstückschlitten (30) in Richtung der X-Achse derart weit verfahrbar ist, dass das am Werkstückschlitten (30) aufgenommene Werkstück (36a-361) bis in die Übergabeposition (70) bewegbar ist,
**dadurch gekennzeichnet, dass**
- die Bearbeitungsmaschine ein Gehäuse aufweist, welches einen Bearbeitungsraum (12) umschließt, wobei das Werkstückmagazin (50) und die Übergabeposition (70) außerhalb dieses Gehäuses vorgesehen sind.

2. Bearbeitungsmaschine nach Anspruch 1,
**dadurch gekennzeichnet, dass**
die Werkstücke (36a-36l) jeweils in einem Werkstückhalter (38a-381) festgelegt sind, wobei das Werkstückmagazin (50) und der Werkstückschlitten (30) zur Handhabung dieser Werkstückhalter (38a-381) ausgebildet sind.

3. Bearbeitungsmaschine nach Anspruch 1 oder 2,
**dadurch gekennzeichnet, dass**
das Werkstückmagazin (50) als separat lösbare und entfernbare Einheit ausgebildet ist.

4. Bearbeitungsmaschine nach einem der vorstehenden Ansprüche,
**dadurch gekennzeichnet, dass**
das Werkstückmagazin (50) zur automatisierten gemeinsamen umlaufenden Bewegung aller enthaltenen Werkstücke (36a-361) entlang eines geschlossenen Pfades (60) ausgebildet ist.

5. Bearbeitungsmaschine nach einem der vorstehenden Ansprüche,
**dadurch gekennzeichnet, dass**
das Werkstückmagazin (50) lediglich zur automatisierten gemeinsamen Handhabung aller enthaltener Werkstücke (36a-361) ausgebildet ist.

6. Bearbeitungsmaschine nach einem der vorstehenden Ansprüche,
**dadurch gekennzeichnet, dass**
die Bearbeitungsmaschine ein Steuergerät umfasst, welches dahingehend ausgebildet ist, dass es eine Bewegung des Werkstückschlittens (30) sowohl zum Zwecke der Relativbewegung des Werkstücks (36a-361) relativ zu einem Werkzeug (22) während der Bearbeitung als auch zum Zwecke des Werkstückwechsels steuert.

## Claims

1. A machining device for material-removing machining of a workpiece, in particular for material-removing machining of a workpiece or a blank for the production of a tooth replacement part or a denture model, said machining device comprising:
- a stationary frame;
- a workpiece magazine (50); and
- a workpiece slide (30) movable relative to said frame for accommodating a work-piece (36a-36l);
- said workpiece magazine (50) being configured for accommodating a plurality of workpieces (35a-36l);
- said workpiece magazine (50) being configured for moving the workpieces (36a-36l) to an interchange point or transfer position (70);
- said workpiece slide (30) being configured for imparting a translational movement to the workpiece (36a-361) along an X axis during workpiece machining;
- said workpiece slide (30) being movable along said X axis to such an extent that said workpiece (36a-361) accommodated on said workpiece slide is movable to said inter-change point or transfer position (70);
**characterized In that**
the machining device comprises a housing which encompasses a machining chamber (12), said machining magazine (50) and said interchange point or transfer position (70) being provided outside said housing.

2. The machining device according to claim 1,
**characterized In that**
the workpieces (36a-361) are each held in a workpiece holder (38a-38l), said work-piece magazine (50) and said workpiece slide (30) being configured for handling said workpiece holders (38a-38l).

3. The machining device according to claims 1 or 2,
**characterized in that**
the workpiece magazine (50) is configured as a separate releasable and removable unit.

4. The machining device according to one of the preceding claims,
**characterized in that**
the workpiece magazine (50) is configured for performing an automated joint circulating motion of all workpieces (36a-361) present therein along a closed path (60).

5. The machining device according to one of the preceding claims,
**characterized in that**
the workpiece magazine (50) is configured for merely perform an automated joint handling of all workpieces (36a-361) present therein.

6. The machining device according to one of the preceding claims,
**characterized in that**
the machining device comprises a controlling device that is configured for controlling a movement of the workpiece slide (30) both for the purpose of moving said workpiece (36a-361) relative to a tool (22) during machining and for the purpose of replacing or changing the workpiece.

## Revendications

1. Machine d'usinage pour l'usinage avec enlèvement de copeaux d'une pièce à usiner, plus particulièrement pour l'usinage avec enlèvement de copeaux d'une pièce à usiner ou d'une ébauche pour la fabrication d'une prothèse dentaire ou d'un modèle de dentier, avec
- un châssis fixe,
- un magasin de pièces à usiner (50) et
- un chariot porte-pièce (30) mobile par rapport au châssis pour le logement d'une pièce à usiner (36a-36l),
- le magasin de pièces à usiner (50) étant conçu pour le logement d'une pluralité de pièces à usiner (36a-361),
- le magasin de pièces à usiner (50) étant conçu pour déplacer des pièces à usiner (36a-361) vers une position de transfert (70),
- le chariot porte-pièce (30) étant conçu pour le mouvement de translation de la pièce à usiner (36a-361) au cours de l'usinage de la pièce en direction d'un axe X,
le chariot porte-pièce (30) étant mobile dans la direction de l'axe X de façon à ce que la pièce à usiner (36a-361) logée sur le chariot porte-pièce (30) soit mobile jusqu'à la position de transfert (70), **caractérisée en ce que**
la machine à usiner comprend un carter qui entoure un espace d'usinage (12), le magasin de pièces à usiner (50) et la position de transfert (70) se trouvant à l'extérieur de ce carter.

2. Machine à usiner selon la revendication 1, **caractérisée en ce que** les pièces à usiner (36a-361) sont chacune fixées dans un support de pièce à usiner (38a-36l), le magasin de pièces à usiner (50) et le chariot porte-pièce (30) étant conçus pour la manipulation de ce support de pièce à usiner (38a-38l).

3. Machine à usiner selon la revendication 1 ou 2, **caractérisée en ce que** le magasin de pièces à usiner (50) est conçu comme une unité séparée et amovible.

4. Machine à usiner selon l'une des revendications précédentes, **caractérisée en ce que** le magasin de pièces à usiner (50) est conçu pour le mouvement de rotation automatisé commun de toutes les pièces à usiner (36a-361) disposées à l'intérieur le long d'un trajet fermé (60).

5. Machine à usiner selon l'une des revendications précédentes, **caractérisée en ce que** le magasin de pièces à usiner (50) est conçu uniquement pour la manipulation automatisée commune de toutes les pièces à usiner (36a-361) disposées à l'intérieur.

6. Machine à usiner selon l'une des revendications précédentes, **caractérisée en ce que** la machine à usiner comprend un dispositif de commande conçu de façon à ce qu'il commande un mouvement du chariot porte-pièce (30) aussi bien pour le mouvement relatif de la pièce à usiner (36a-36l) aussi bien relativement à un outil (22) pendant l'usinage que pour le changement de la pièce à usiner.
